# EUROPEAN PATENT SPECIFICATION

(11) **EP 0 401 182 B1**
(45) Date of publication and mention of the grant of the patent: **11.08.1993**
(21) Application number: 90850149.7
(22) Date of filing: 20.04.1990
(51) Int. Cl.: F16B 13/06, E04B 1/48

(54) **Anchoring bolt**
Ankerbolzen
Boulon d'ancrage

(30) Priority: 29.05.1989 SE 8901907
(43) Date of publication of application: 05.12.1990
(73) Proprietor: SCANTOOL HANDELSBOLAG, S-181 34 Lidingö (SE)
(72) Inventor: Ohlin, Stig Danold, S-352 50 Växjö (SE)
(74) Representative: Falck, Magnus

(56) References cited:
- DE-A- 3 044 453
- DE-C- 2 552 435

## Description

The present invention relates to a tubular anchoring bolt adapted to be anchored in a hole in a rigid material e. g. a wall, a rock face or the like. An object of the invention is preferably to achieve an anchoring bolt reusable, easy to handle and with a production cost brought down to a minimum.

Several types of anchoring bolts are hitherto known most of which are provided with an expandable plug, consisting of wood, plastic or the like and a cooperating screw threaded bolt. When the screw is screwed into the plug it is brought to expand radially against the surrounding material. At the same time, however, the expandable plug is being deformed by the screw and consequently it can not be taken out of the hole and used again.

Another design of an anchoring device known on the market comprises a tubular cylindrical body, internally screw threaded in one end portion. Said portion being followed by a conical, expandable portion in which a wedge formed expansion body is placed. Said body being adapted to cause expansion of the expandable portion when driven, for instance by a screw, in an axial direction away from the screw threaded end. Certainly, the expandable portion of the cylindrical body has not been deformed by the screw but it would be very difficult to bring the wedge formed body out of its wedged position and consequently the cylindrical body can not be loosened and taken out of the hole and be used again.

Another design of an anchoring device published in DE-C-25 52 435 comprises in combination four elements namely a cylindrical expansion body, a ball used as an expander, a cylindrical plug in contact with the ball for preventing the ball to fall out of the expandable body. The cylindrical plug and the ball will be forced axially by the aid of a screw threaded bolt. When being forced axially the cylindrical plug will be deformed with the consequence that the anchoring device can not be used again.

Still another design of an anchoring device published in DE-A-30 44 453 comprises a tubular cylindrical body internally screw threaded in one end portion and split open in the ather, in which a ball is placed as an expansion body. When driven in the axial direction by the aid of a screw nut the ball will cause expansion of the split open portion in order to fix the cylindrical body when placed in a pre-drilled hole. The nut is screwed in the axial direction by the aid of a special spanner. After the anchoring device being fixed in the hole a fixing bolt for securing an object, as desired, is screwed into the screw threaded port ion of the cylindrical body.

The two last mentioned devices require an extra plug and a special spanner respectively which make them expensive in production as well as in stock-keeping aspects.

An object of the present invention is to achieve an anchoring bolt comprising a tubular cylindrical body partly split open axially in one internally conical end portion and internally screw threaded in the other. In the conical portion there is a ball the diameter of which is such that the ball just only can be put into the hole of the cylindrical body and down to the conical end portion. The cylindrical body is brought to expand by the aid of a fixing bolt screwed into the body and against the ball placed in the conical portion of the cylindrical body.

The most characteristic of the present invention is that the thread of the screw threaded portion in the cylindrical body is a roll thread, which is intended to be rolled up after the ball has been placed in the conical portion of the cylindrical body. As the inner-diameter if the roll thead is smaller than that of the cylindrical body before the thread being rolled up, the ball will be kept in the conical portion by the the roll thread, thereby forming together with the cylindrical body an easy unit to handle.

The advantages of the present invention, compared to an anchoring bolt comprising a cylindrical expandable body and a separat expander are besides the easyness with which it can be handled, also lower production and stock keeping costs. The capability of the roll thread of taking higher axial force compared to that of a conventional thread makes it possible to reduce the axial lenght of the screw threaded portion of the cylindrical body and consequently the total axial lenght of the body. Besides lower material costs this facilitates also the drilling of the hole in the cylindrical body with no little reduction of the production costs as a consequence.

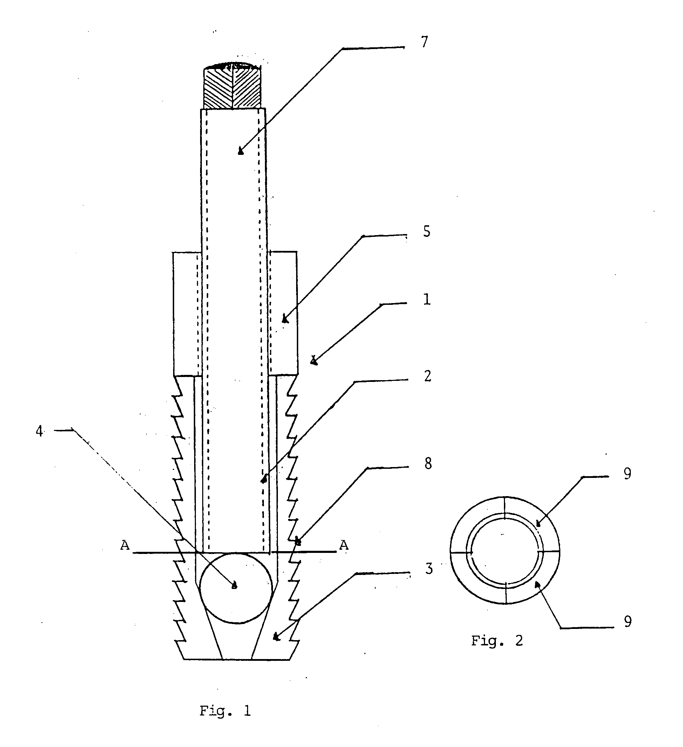

Further details of the invention and the manner in which it may be put into practice will be described in the following by way of an example with reference to the accompaning drawing, in Fig 1 illustrates an anchoring bolt in accordance with a preferred embodiment of the invention in longitudinal section and Fig 2 illustrates the bolt illustrated in Fig 1 in cross section, on Section A-A.

The expandable body 1 consists of a homogeneous and cylindrical metal piece in the centre of which a hole 2 has been drilled axially and through the whole piece. In one end portion of the body 1 the cross section of the hole 2 diminishes toward the end 3 of the body. A cone angle of about 23 degrees has been found suitable. A ball 4, intended to be used as an expander, is put into the hole 2 and placed in the conical portion thereof. The diameter of the ball 4 is somewhat smaller than the inner-diameter of the hole.

With the ball 4 in the conical portion of the hole 2 the opposite portion 5 thereof is being screw threaded. The thread 6 is rolled up which makes the inner-diameter of the hole smaller compared with that of a thread conventionally made. Besides the roll thread having a bigger strength the smaller diameter of the thread will keep the ball 4 in the conical portion threrby forming together with the cylindrical body 1 an easy unit to handle.

In order to bring the cylindrical body to expand in radial direction when the ball 4 is being forced axially in the hole 2 the conical portion is split open which is shown in Fig. 2. The split open arrangement extends from the conical end portion 3 almost up to the screw threaded portion 5 of the hole 2. The ball is intended to be forced axially by means of a screw threaded fixing bolt 7 which is screwed into the screw threaded portion of the hole 2. During its axial movement the ball 4 will be forced to press out radially the split open legs 9 against the surrounding material to which the anchoring bolt is intended to be anchored. To increase the friction between the bolt and the surrounding material the outer perephery of the split open legs 9 is designed with teeth 8 or profiled in one way or the other.

The advantage of using a ball as an expander in order to achieve the expansion of the cylindrical body is that the ball, pressing against the surrounding conical wall along a circular contact line, creates a greater radial force compared to that of a wedge either it is separate or integrated with the fixing bolt. Furthermore, when the fixing bolt 7 is loosened it will be very easy to loosen the ball 4 as well, beacause of the small contact surface and consequently the low friction between the ball and the surrounding wall. As a matter of fact the ball 4 will be pressed back automatically to its original position by the elasticity force of the split open legs 9. After the screw 7 has been loosened, normally, the cylindrical body takes back its original form and consequently it will be quite in order to use again.

A further advantage of using a ball as an expander compared, for instance, to a wedge is that the ball never can move at an angle in relation to the centre shaft of the cone. Consequently, the ball will press against the cone wall with the same pressure around its entire contact line during the whole expanding movement.

A still further advantage of using a ball in combination with a roll thread is that the hole 2, drilled in the cylindrical body 1, does not need to be made wider than making the ball 4 fit just exactly in the hole 2. As the inner-diameter of the roll thread 6 is smaller than that of the hole 2 the ball 4 will be kept in the conical portion even after the fixing bolt has been screwed out. The type and design of the fixing bolt can be arbitrarily chosen. The only demand is that the thread of the bolt and the roll thread 6 will fit together.

## Claims

1. An anchoring bolt comprising:
- a tubular cylindrical body partly split open axially in one internally conical end portion and internally screw threaded in the other end portion, the split open arrangement extending from the conical end portion almost up to the screw threaded portion,
- a ball, placed in the conical end portion and
- a fixing bolt adapted to be screwed into the screw threaded end of the tubular body,
CHARACTERIZED IN,
- that the diameter of the ball is such that the ball fits just only in the hole of the tubular cylindrical body,
- that the thread of the screw threded end portion of the hole (2) consists of a roll thread (6) adapted to be rolled up after the ball (4) has been placed in the conical split open portion of the hole (2) and
- that the inner-diameter of the roll thread is smaller than the diameter of the ball.

## Patentansprüche

1. Ein Ankerbolzen bestehend aus:
- einem rohrförmigen zylindrischen Körper, der an dem einen, innen konischen Ende in axialer Richtung teilweise aufgeschlitzt ist, und am anderen Ende ein Innengewinde hat, wobei der aufgeschlitzte Teil von dem konischen Endstück fast bis zu dem gewindeversehenen Endstück reicht;
- einer Kugel im konischen Endstück und
- einem Befestigungsbolzen, der in das gewindeversehene Ende des zylindrischen Körpers eingeschraubt wird,
GEKENNZEICHNET DADURCH,
- daß die Kugel einen solchen Durchmesser hat, daß sie gerade noch in die Öffnung des rohrförmigen zylindrischen Körpers paßt;
- daß das Gewinde an dem einen Ende des Körpers (2) aus einem Rollgewinde (6) besteht, das hinaufgerollt wird, nachdem die Kugel (4) in das konische aufgeschlitzte Ende des Körpers (2) gesteckt wurde, und
- daß der Innendurchmesser des Rollgewindes kleiner ist als der Durchmesser der Kugel.

## Revendications

1. Boulon d'ancrage comprenant:
- un corps tubulaire partiellement fendu dans le sens longitudinal, avec une extrémité intérieurement conique et une extrémité intérieurement filetée, la fente se prolongeant de l'extrémité conique presque jusqu'à l'extrémité filetée,
- une bille, logée dans l'extrémité conique,
- un boulon de fixation destiné à être vissé dans l'extrémité filetée du corps tubulaire.
**CARACTÉRISTIQUES**
- Le diamètre de la bille est calculé de manière que celle-ci ne puisse entrer que dans l'orifice du corps tubulaire.
- Le filetage de l'extrémité filetée de l'orifice (2) consiste en un filet (6) destiné à être laminé après que la bille (4) ait été positionnée dans la partie fendue de l'orifice (2).
- Le diamètre intérieur du filet est plus petit que celui de la bille.
